# EUROPÄISCHE PATENTSCHRIFT

(11) **EP 1 893 706 B1**
(45) Veröffentlichungstag und Bekanntmachung des Hinweises auf die Patenterteilung: **05.11.2008**
(21) Anmeldenummer: 06763736.3
(22) Anmeldetag: 14.06.2006
(51) Int. Cl.: C09D 175/00

(54) **VERFAHREN ZUR BEFESTIGUNG UND SICHERUNG VON UFERN, ABHÄNGEN, BÖSCHUNGEN UND ZUMINDEST TEILWEISE IN BEWEGTEN GEWÄSSERN BEFINDLICHEN BAUWERKEN DURCH VERBUNDSTOFFE AUS MINERALISCHEN PARTIKELN UND EINEM EPOXYDHARZ**
METHOD FOR STABILISING AND SECURING RIVERS, SLOPES AND EMBANKMENTS AND CONSTRUCTIONS WHICH CAN BE AT LEAST PARTIALLY DISPLACED IN WATER, BY COMPOSITE MATERIAL MADE FROM MINERAL PARTICLES AND AN EPOXY RESIN
PROCEDE POUR CONSOLIDER ET SECURISER DES RIVES, DES TALUS, DES DIGUES ET DES CONSTRUCTIONS SE TROUVANT AU MOINS PARTIELLEMENT DANS DES EAUX EN MOUVEMENT, AU MOYEN DE MATERIAUX COMPOSITES COMPRENANT DES PARTICULES MINERALES ET D'UNE RESINE EPOXY

(30) Priorität: 14.06.2005 DE 102005027551
(43) Veröffentlichungstag der Anmeldung: 05.03.2008
(73) Patentinhaber: BASF SE, 67056 Ludwigshafen (DE)
(72) Erfinder: EISENHARDT, Andrea, 49377 Vechta (DE); LEBERFINGER, Marcus, 49124 Georgsmarienhütte (DE); ROSER, Joachim, 68161 Mannheim (DE)
(86) Internationale Anmeldenummer: PCT/EP2006/063242
(87) Internationale Veröffentlichungsnummer: WO 2006/134147

(56) Entgegenhaltungen:
- EP-A- 0 037 442
- EP-A- 1 300 439
- WO-A-99/50369
- FR-A- 2 722 223
- US-A- 4 933 744
- US-A- 5 626 761
- US-B1- 6 228 500

## Beschreibung

Gegenstand der Erfindung ist ein Verfahren zur Befestigung und Sicherung von Ufern, Abhängen, Böschungen und zumindest teilweise in bewegten Gewässern befindlichen Bauwerken wie Stütz- und Konstruktionselementen durch Verbundstoffe aus mineralischen Partikeln, vorzugsweise Steinen, insbesondere Schotter, und einem Epoxydharz.

Die Befestigung von Ufern, insbesondere von Uferböschungen, ist für die Regulierung von fließenden Gewässern häufig notwendig. Auch beim Neubau und insbesondere bei der Sanierung von Wasserstraßen und Deichen muss zumeist eine Befestigung von Bereichen des Ufers erfolgen.

Bisher wurden für solche Art Sanierungszwecke Verbundkörper aus Schotter und hochwertigem Beton vorgefertigt und am Einsatzort platziert. Bei diesem Verfahren ist jedoch eine Sanierung von beschädigten Bereichen des Ufers an Ort und Stelle nicht möglich. Außerdem haben die Bauteile zumeist ein sehr hohes Gewicht. Ein weiterer Nachteil von Beton ist die fehlende Elastizität. Dies führt dazu, dass der Beton keine Spannungen verkraftet und sich diese Verbunde leicht lösen.

Eine Möglichkeit der Sanierung von beschädigten Bereichen des Ufers an Ort und Stelle besteht in der Verwendung von härtenden Teerformulierungen oder Flüssigbetonen oder Flüssigmörteln, die über den zu verfestigenden Gesteinsschotter der Uferböschungen ausgetragen wurden. Mit diesem Verfahren kann für eine gewisse Zeit eine Verfestigung der Uferböschungen erreicht werden. Es tritt jedoch vor allem der ökologische Nachteil auf, dass im Laufe der Zeit phenolische oder andere umweltschädliche Verbindungen aus dem Teer freigesetzt werden können. Weiterhin entstehen bei diesen Verfahrensweisen im wesentlichen vollständig lückenlose Strukturen. Eventuell im Innern enthaltende Hohlräume im Uferbereich werden dabei ausgefüllt.

Die Verwendung von Polyurethanen zur Herstellung von Formkörpern mit mineralischen Inhaltsstoffen sowie zur Befestigung von Gesteinsschichten, insbesondere im Bergbau, ist ebenfalls bekannt.

So beschreibt DE 35 02 997 ein Verfahren zur Verfestigung von geologischen Formationen im Bergbau durch Polyurethanschaumstoffe. Hierbei werden in die zu verfestigende Formation Bohrlöcher eingebracht, die mit dem Gemisch der flüssigen Komponenten für die Polyurethanreaktion gefüllt und danach verschlossen werden. Das Polyurethan schäumt auf und verteilt sich dadurch in den Ritzen der Gesteinsformation.

Durch das nachfolgende Aushärten des Polyurethanschaumes wird die Formation verfestigt. Ein derartiges Verfahren ist jedoch bei der Sanierung von Böschungen, insbesondere Uferböschungen, nicht anwendbar, da eine Verschäumung dort nicht erwünscht ist, da das Eindringen von Wasser in den Schaum mit der Zeit eine Zerstörung des Schaums bewirken würde.

In der DE 102 41 293 wird ein Verfahren zur Befestigung von Ufern beschrieben. Dabei wird ein stark hydrophobes kompaktes Polyurethan auf den Teil des Ufers, der befestigt werden soll, aufgetragen. Dies setzt jedoch eine gleichmäßige Oberfläche des entsprechenden Uferabschnitts voraus.

In einer anderen Ausführungsform dieses Verfahrens werden Formkörper hergestellt, indem Gestein, vorzugsweise Schotter, in eine Form eingebracht und darauf das Polyurethansystem, darunter versteht man das flüssige Reaktionsgemisch der Ausgangskomponenten des Polyurethans, aufgebracht wird. Die nach dem Aushärten entstehenden Formkörper können auf der Uferböschung platziert werden.

In beiden Fällen ist jedoch eine gleichmäßige Verteilung des Polyurethans auf dem Gestein kaum zu bewerkstelligen. Beim Ausbringen des Systems auf die Uferböschung kann es außerdem, insbesondere bei einem ungleichmäßigen Untergrund, zu einer ungenügenden Verfestigung der Böschung kommen.

Aufgabe der Erfindung war es, ein einfaches Verfahren zur Befestigung und Sicherung von Ufern, Abhängen, Böschungen oder von zumindest teilweise in bewegten Gewässern befindlichen Bauwerken zu finden, bei dem eine hohe Festigkeit des Ufers erreicht werden kann und bei dem das befestigte Ufer auch einer hohen mechanischen Belastung standhält.

Die Aufgabe konnte gelöst werden, indem man das Ufer, den Abhang, die Böschung oder das Bauwerk durch Verbunde aus einem Epoxydharz und losen mineralischen Partikeln befestigt und sichert. Dazu werden die flüssigen Ausgangskomponenten des Epoxydharzes auf die mineralischen Partikel aufgebracht und das Epoxidharz ausgehärtet. So können in einem ersten Schritt in einer Mischvorrichtung die flüssigen Ausgangskomponenten eines Epoxydharzes mit mineralischen Partikeln vermischt und in einem zweiten Schritt diese Mischung auf den zu befestigenden Uferabschnitt oder an die zumindest teilweise in bewegten Gewässern befindlichen Bauwerke, wie Stütz- und Konstruktionselemente ausgebracht wird. Weiter kann die Mischung eines Epoxydharzes mit mineralischen Partikeln auch in eine Form gegeben werden, wo das Epoxydharz aushärtet. Der erhaltene Formkörper wird dann auf den zu befestigenden Uferabschnitt oder an die zumindest teilweise in bewegten Gewässern befindlichen Bauwerke, wie Stütz- und Konstruktionselemente angebracht.

Gegenstand der Erfindung ist demzufolge ein Verfahren zur Herstellung eines Verbundes aus einem Epoxydharz und losen mineralischen Partikeln, umfassend die Schritte
a) Mischung der losen mineralischen Partikel mit den flüssigen Ausgangskomponenten des Epoxydharzes in einem Mischer
b) Ausbringen dieser Mischung aus dem Mischer,
c) Aushärten des Epoxydharzes.

Bei den losen mineralischen Partikeln handelt es sich bevorzugt Steine, besonders bevorzugt um Schotter, insbesondere um Granitschotter. Die mineralischen Partikel haben vorzugsweise eine Größe von 0,1 bis 50 cm, besonders bevorzugt von 1 bis 50 cm, weiter bevorzugt von 1 bis 20 cm, besonders bevorzugt von 2 bis 15 cm, insbesondere von 2,5 bis 6,5 cm.

Als Mischer für die Vermischung der losen mineralischen Partikel mit den Ausgangskomponenten des Epoxydharzes können prinzipiell alle Geräte eingesetzt werden, mit denen eine weitgehend vollständige Benetzung der mineralischen Partikel mit den flüssigen Ausgangskomponenten des Epoxydharzes möglich ist. Als besonders geeignet haben sich Mischer erwiesen, die aus einem offenen Behälter, beispielsweise einer Trommel, die vorzugsweise mit Einbauten versehen ist, bestehen. Zur Vermischung kann entweder die Trommel in Drehung versetzt oder die Einbauten bewegt werden.

Derartige Mischer sind bekannt und werden beispielsweise in der Bauindustrie zur Herstellung von Betonmischungen eingesetzt.

Wenn die Mischung direkt auf die zu befestigende Fläche aufgebracht wird, kann es vorteilhaft sein, den Mischer an einem Fahrzeug, beispielsweise einem Traktor, einem Frontlader oder einem LKW anzubringen. Bei dieser Ausführungsform des erfindungsgemäßen Verfahrens kann die Mischung jeweils zu dem Platz transportiert werden, an dem sie aufgebracht werden soll. Nach dem Entleeren des Mischers kann die Mischung manuell, beispielsweise mittels Harken, verteilt werden.

In einer Ausführungsform des erfindungsgemäßen Verfahrens erfolgt die Mischung der mineralischen Partikel mit den flüssigen Ausgangskomponenten des Epoxydharzes kontinuierlich. Dazu werden die mineralischen Partikeln und die flüssigen Ausgangskomponenten des Epoxydharzes kontinuierlich in den Mischer eingetragen und die benetzten mineralischen Partikeln kontinuierlich ausgetragen. Bei dieser Verfahrensweise muss darauf geachtet werden, dass die Einsatzstoffe so lange im Mischer verbleiben, dass eine ausreichende Benetzung der mineralischen Partikel erfolgen kann. Zweckmäßigerweise kann eine solche Mischvorrichtung in einer solchen Geschwindigkeit an den zu befestigenden Abschnitten entlang bewegt werden, dass die mit den flüssigen Ausgangskomponenten des Epoxydharzes benetzten mineralischen Partikel in einer solchen Menge aus dem Mischer ausgetragen werden, wie sie zur Befestigung benötigt werden. Es ist auch möglich, die kontinuierliche Mischeinrichtung stationär zu betreiben und die aus dem Mischer ausgetragenen benetzten mineralischen Partikeln zu dem gewünschten Ort zu transportieren.

In einer weiteren Ausführungsform der kontinuierlichen Ausgestaltung des erfindungsgemäßen Verfahrens kann der Mischer eine rotierende Trommel sein, in die kontinuierlich mineralische Partikel eingebracht werden. Diese Trommel ist mit Düsen bestückt, die kontinuierlich die Ausgangskomponenten des Epoxydharzes auf den mineralischen Partikeln verteilen. Die Rotation der Trommel sorgt hierbei für eine gute Durchmischung von Epoxydharz und mineralischen Partikeln. Durch eine Öffnung am Ende der Trommel werden dann kontinuierlich Epoxydharz/ mineralische Partikel-Verbunde ausgetragen. Die rotierende Trommel kann dabei horizontal, aber auch in verschiedenen Winkeln geneigt sein, um den Austrag zu fördern.

In einer weiteren Ausführungsform des kontinuierlichen Verfahrens werden die mineralischen Partikel kontinuierlich auf einem Förderband, welches durch einen Tunnel gefahren wird, transportiert. Dieser verfügt über Öffnungen, über die kontinuierlich die Ausgangsstoffe des Epoxydharzes auf die mineralischen Partikeln ausgetragen werden. Am Ende des Förderbandes fallen die mineralischen Partikeln dann in eine offene Mischtrommel, die mit einstellbarer Fördergeschwindigkeit den Verbund austrägt.

Die Dicke der Schicht aus dem Verbundstoff liegt vorzugsweise bei mindestens 3 cm, besonders bevorzugt bei mindestens 10 cm. Geringe Schichtdicken, insbesondere Schichtdicken kleiner 3 cm weisen häufig nur eine unzureichende Stabilität auf. Die maximale Dicke ist abhängig von den örtlichen Gegebenheiten und kann beispielsweise bis zu 5 Metern betragen.

Bei der Herstellung von Formkörpern wird die Mischung der losen mineralischen Partikel mit den flüssigen Ausgangskomponenten des Epoxydharzes nach dem Vermischen in eine vorzugsweise nach oben offene Form gegeben, wo das Epoxydharz aushärtet. Der so entstandene Verbundkörper kann auf das Ufer aufgebracht werden. Die Formkörper haben vorzugsweise eine Größe von 100 ± 50 x 100 ±50 x 15 ± 10 cm.

Die Zeit für die Mischung sollte mindestens so bemessen sein, dass die mineralischen Partikel möglichst vollständig mit der flüssigen Mischung benetzt sind und höchstens so lange, dass das Epoxydharz noch nicht ausgehärtet ist.

In einer weiteren Ausführungsform ist es auch möglich, die losen mineralischen Partikel in der gewünschten Dicke auf den zu befestigenden Uferabschnitt aufzubringen und darauf mittels einer geeigneten Vorrichtung, beispielsweise einer Sprühpistole, die flüssigen Ausgangskomponenten des Epoxydharzes aufzubringen, wo sie sich verteilen und aushärten. Dieses Verfahren hat aber gegenüber dem Verfahren, bei dem die mineralischen Partikel mit den Flüssigen Ausgangskomponenten in einem Mischer gemischt werden, den Nachteil, dass hier die Verteilung des Epoxydharzes ungleichmäßiger ist und Fehlstellen, an denen sich kein Epoxydharz befindet, nicht ausgeschlossen werden können. Weiterhin kann es beim Vorhandensein von lose haftenden Verunreinigungen, wie Sand oder Erde, Problemen bei der Haftung der mineralischen Partikel aneinander und somit bei der Stabilität des Verbundstoffs geben.

Demgegenüber ist es, wenn die mineralischen Partikel zusammen mit den flüssigen Ausgangskomponenten des Epoxidharzes in einem Mischer gemischt werden, möglich, auch solche mineralischen Partikel zu verwenden, die an ihrer Oberfläche lose haftende Verunreinigungen aufweisen. Durch die mechanische Beanspruchung beim Mischvorgang werden diese Verunreinigungen von der Oberfläche der mineralischen Partikel entfernt und können somit nicht mehr die Haftung der mineralischen Partikel aneinander beeinträchtigen.

In einer bevorzugten Ausführungsform des erfindungsgemäßen Verfahrens kann auf die Oberfläche des Verbundmaterials Sand aufgebracht werden. Damit der Sand auf der Oberfläche haftet, sollte das Aufbringen des Sandes vor der vollständigen Aushärtung des Epoxydharzes erfolgen.

Es können beliebige Sande eingesetzt werden. Dabei kann es sich um natürlichen Sand oder künstlichen Sand, wie Hüttensand oder Schlackenbrechsand handeln.

In einer bevorzugten Ausführungsform wird Quarzsand eingesetzt.

Die Korngröße des Sandes kann in weiten Grenzen variieren. Bevorzugt liegt die Korngröße im üblichen Bereich zwischen 0,002-2 mm. Bevorzugt eingesetzt werden Feinsand, das heißt solcher mit einer Korngröße zwischen 0,06-0,2 mm, Mittelsand mit einer Korngröße zwischen 0,2-0,6 mm und/oder Grobsand mit einer Korngröße zwischen 0,6-2,0 mm.

Die Menge des Sandes sollte so bemessen sein, dass die Oberfläche des Verbundmaterials im wesentlichen bedeckt ist, es jedoch nicht zu einer Verstopfung der Poren des Formkörpers kommt. Vorzugsweise wird der Sand in einer Menge von 2 bis 4 kg /m² des Formkörpers aufgebracht.

Durch den Sand kommt es zu einer Verstärkung der Kontaktpunkte zwischen den mineralischen Partikel. Ferner verbessert der Sand den UV-Schutz des Verbundmaterials.

Die durch den Sand bewirkte raue Oberfläche begünstigt die Ansiedlung von Lebewesen, wie Pflanzen und Moosen auf den ausgebrachten Verbundmaterial. Dies kann beispielsweise beim Ausbringen des Verbundmaterials in Naturschutzgebieten vorteilhaft sein.

Das Mengenverhältnis von Epoxydharz zu mineralischen Partikeln wird mindestens so gewählt, dass eine ausreichende Festigkeit des Verbunds gewährleistet ist. Die genauen Mengen hängen beispielsweise auch von der Stärke der Beanspruchung des Verbundmaterials an den jeweiligen Uferabschnitten ab.

Da bei den erfindungsgemäßen Verbunden die mineralischen Partikel im wesentlichen an den Berührungsflächen miteinander verbunden sind, entstehen Lücken, und die Verbunde sind wasserdurchlässig. Dadurch wird die Energie, mit der das Wasser auf den Schotterverbund auftrifft, durch das Ausweichen des Wassers in Hohlräume besser adsorbiert und führt nicht zur Zerstörung des Verbundmaterials.

Unter Ufer können bei der vorliegenden Erfindung die Ufer von Bächen, Flüssen oder Kanälen verstanden werden. Weiterhin kann es sich um Ufer von Seen, Stauseen oder Küstenabschnitte von Meeren handeln. Dabei kann es sich um flache Ufer, Böschungen, Dämme, Buhnen oder Deiche handeln. Weiter können mit dem Erfindungsgemäßen Verfahren Abhänge und Böschungen, beispielsweise im Landschafts- und Gartenbau oder im Gebirge befestigt und gesichert werden.

Eine weitere Anwendungsmöglichkeit des erfindungsgemäßen Verfahrens ist der Schutz von Bauwerken, die sich zumindest teilweise im Wasser befinden, vor der sogenannten Auskolkung. Darunter versteht man eine örtliche Vertiefung des Grunds der strömenden Gewässer, insbesondere der Flusssohle zumeist bei starker Wasserströmung in Engstrecken, häufig auch an Brückenpfeilern, wo infolge des Staus und des nachfolgenden stärkeren Gefälles durch rotierende Strömung, die sogenannte Wasserwalze, die Fundamente angegriffen werden. Der gleiche Effekt findet sich beispielsweise bei Stütz- oder Brückenpfeilern von See-, Wasser- und/oder Schiffsbrücken, Hafenanlagen, wie schwimmenden, festen Molen, Bootsanlegern, oder Auswasserungsanlagen, bei Kaianlagen, Bootshäusern, Ufermauern, Bohrinseln, Off-Shore-Anlagen, wie Windenergieanlagen, Seezeichen, Leuchttürmen, oder Messplattformen, Wasserkraftwerken, Tunneln oder Pfählungen.

Beim Schutz von Bauwerken, die sich zumindest teilweise im Wasser befinden, ist es vorteilhaft, Formkörper zu verwenden bzw. zuerst die mineralischen Partikel mit den Flüssigen Ausgangskomponenten des Epoxydharzes zu mischen, dann die Mischung aus dem Mischer auf die gewünschte Stelle aufzubringen und anschließend das Epoxydharz an Ort und Stelle auszuhärten. Dabei handelt es sich bei der gewünschten Stelle um eine Stelle, die sich zumindest teilweise unter Wasser befindet. Die Ausbringung der flüssigen Aufbaukomponenten des Epoxydharzes bei diesem Anwendungsfall wäre nachteilig, da es, auf Grund der Wasserbewegung und des Auftriebs, zu keiner gleichmäßigen Verteilung der Aufbaukomponenten auf den mineralischen Partikeln kommen würde.

Die Geometrie der gegen die Auskolkung angebrachten Verbunde richtet sich nach den jeweiligen Strömungsverhältnissen.

Die Verbundstoffe zur Verhinderung der Auskolkung können dabei, je nach den Strömungsverhältnissen, sowohl direkt an die Bauwerke als auch von diesen entfernt angebracht werden.

Durch das offene Lückensystem der Verbundkörper, das die hydrodynamische Energie aufnehmen kann, somit die Wellen-, Strömungsenergie bricht und infolge dessen zu deutlich geringerer Auskolkung führt, können Schäden an Bauwerken vermieden und die Tragfähigkeit von Stütz- und Konstruktionselementen erhöht werden.

Ein weiterer Vorteil ist die einfache Möglichkeit, Reparaturen an den Verbunden vorzunehmen.

Wie beschrieben, handelt es sich bei den Epoxydharzen um solche, die aus flüssigen Ausgangskomponenten hergestellt werden, die zu festen Kunststoffen aushärten. Vorzugsweise sind die Kunststoffe kompakt, das heißt, sie enthalten praktisch keine Poren. Gegenüber zelligen Kunststoffen zeichnen sich kompakte Kunststoffe durch eine größere mechanische Stabilität aus. Blasen innerhalb des Epoxydharzes können auftreten und sind zumeist unkritisch. Sie sollten jedoch möglichst minimiert werden.

Außerdem ist es bevorzugt, wenn die Kunststoffe hydrophob sind. Damit wird ein Abbau der Kunststoffe durch das Wasser unterdrückt.

Unter Epoxydharzen werden im Rahmen dieser Erfindung Polymere verstanden, die, ausgehend von Verbindungen, enthaltend Epoxidgruppen, über diese Epoxidgruppen durch Polyaddition mit geeigneten Härtern bzw. Polymerisation, erhalten werden. Vorzugsweise werden erfindungsgemäße Epoxydharze durch Polyaddition mit geeigneten Härtern erhalten.

Als Verbindungen, enthaltend Epoxidgruppen, werden vorzugsweise Verbindungen eingesetzt, welche zumindest zwei Epoxidgruppen aufweisen und bei Raumtemperatur flüssig sind. Dabei können auch Mischungen unterschiedlicher Verbindungen, enthaltend Epoxidgruppen eingesetzt werden. Vorzugsweise sind diese Verbindungen hydrophob oder die Mischungen enthalten zumindest eine Verbindung, enthaltend Epoxidgruppen, die hydrophob ist. Solche hydrophoben Verbindungen werden beispielsweise durch Kondensationsreaktion von Bisphenol A oder Bisphenol F mit Epichlorhydrin erhalten. Diese Verbindungen können einzeln oder als Mischungen eingesetzt werden.

In einer Ausführungsform werden Mischungen aus oben genannten hydrophoben Verbindungen, enthaltend Epoxidgruppen, mit selbst emulgierbaren hydrophilen Verbindungen, enthaltend Epoxidgruppen, eingesetzt. Dabei werden diese hydrophilen Verbindungen durch Einführen von hydrophilen Gruppen in die Hauptkette der Verbindung, enthaltend Epoxidgruppen, erhalten. Solche Verbindungen und Verfahren zu deren Herstellung sind beispielweise in JP-A-7-206982 und JP-A-7-304853 offenbart.

Als Härter dienen Verbindungen, welche die Homopolymerisation der Verbindungen, enthaltend Epoxidgruppen, katalysieren oder welche kovalent mit den Epoxidgruppen oder der sekundären Hydroxylgruppen reagieren, wie Polyamine, Polyaminoamide, Ketimine, Carbonsäureanhydride und Melamin- Harnstoff- Phenol- und Formaldehydaddukte. Vorzugsweise werden Ketimine, erhältlich durch Umsetzen einer Verbindung mit primärere oder sekundärer Aminogruppe, wie Diethylentriamin, Triethylentetramin, Propylendiamin oder Xylylendiamin mit einer Carbonylverbindung, wie Aceton, Methylethylketon oder Isobutylmethylketon, alphatische, alicyclische und aromatische Polyaminverbindungen und Polyamidverbindungen eingesetzt. Besonders bevorzugt werden als Härter Ketimine oder verträgliche Mischungen, enthaltend Ketimine, eingesetzt.

Das Verhältnis an reaktiven Gruppen im Härter zu Epoxidgruppen ist vorzugsweise von 0,7:1 bis 1,5: 1, besonders bevorzugt von 1,1:1 bis 1,4:1.

Weiter können bei der Herstellung der Epoxydharze neben den Verbindungen, enthaltend Epoxidgruppen, und den eingesetzten Härtern noch weitere Zusatzstoffe, wie Lösemittel, reaktiv-Verdünnungsmittel, Füllstoffe und Pigmente gegeben werden. Solche Zusatzstoffe sind dem Fachmann bekannt.

Vorteile von erfindungsgemäßen Verbundsystemen auf Epoxydharzbasis sind geringe Kosten und eine leichte Verarbeitbarkeit der Ausgangskomponenten des Epoxydharzes. So treten bei der Verarbeitung beispielsweise so gut wie keine gesundheitsschädlichen Dämpfe auf. Weiter weisen Mischungen der flüssigen Ausgangskomponenten des Epoxydharzes eine geringe Viskosität auf, wodurch diese einfach mit den mineralischen Partikeln gemischt und sparsam dosiert werden können. Weitere Vorteile von Verbundmaterialien auf Epoxydharzbasis sind eine hohe Festigkeit, Korrosionsbeständigkeit und gute Haftung auch auf nassen Oberflächen.

## Patentansprüche

1. Verfahren zur Befestigung und Sicherung von Ufern, Abhängen, Böschungen oder von zumindest teilweise in bewegten Gewässern befindlichen Bauwerken, **dadurch gekennzeichnet, dass** man das Ufer, den Abhang, die Böschung oder das Bauwerk durch Verbunde aus einem Epoxydharz und losen mineralischen Partikeln befestigt und sichert.

2. Verfahren nach Anspruch 1 oder 2, **dadurch gekennzeichnet, dass** die losen mineralischen Partikel eine Größe von 0,1 bis 50 cm haben.

3. Verfahren nach Anspruch 1, **dadurch gekennzeichnet, dass** man die Verbunde nach Anspruch 1 herstellt, indem man die flüssigen Ausgangskomponenten des Epoxydharzes auf die mineralischen Partikel aufbringt und das Epoxydharz aushärtet.

4. Verfahren nach Anspruch 3, **dadurch gekennzeichnet, dass** man nach dem Aufbringen der flüssigen Ausgangskomponenten des Epoxydharzes auf die mineralischen Partikel und vor dem Aushärten des Epoxydharzes Sand auf die Oberfläche des Epoxydharzes aufbringt.

5. Verfahren nach Anspruch 3 oder 4, **dadurch gekennzeichnet, dass** man die flüssigen Ausgangskomponenten des Epoxydharzes auf die mineralischen Partikel aufbringt, indem man mineralischen Partikel und flüssige Ausgangskomponenten des Epoxydharzes in einem Mischer mischt und anschließend die erhaltene Mischung aus dem Mischer ausbringt.

6. Verfahren nach Anspruch 5, **dadurch gekennzeichnet, dass** das Verfahren diskontinuierlich durchgeführt wird.

7. Verfahren nach Anspruch 5, **dadurch gekennzeichnet, dass** das Verfahren kontinuierlich durchgeführt wird.

8. Verfahren nach Anspruch 5 bis 7, **dadurch gekennzeichnet, dass** man die Mischung auf dem zu sichernden Ufer, Abhang oder der zu sichernden Böschung oder an oder in einem Abstand zu dem zu sichernden Bauwerk aufbringt.

9. Verfahren nach Anspruch 5 bis 7, **dadurch gekennzeichnet, dass** man die Mischung, enthaltend die mineralischen Partikel und die flüssigen Ausgangskomponenten des Epoxydharzes, vor dem Aushärten des Epoxydharzes in eine Form gibt, und in dieser Form zu einem Formkörper aushärtet.

10. Verfahren nach Anspruch 9, **dadurch gekennzeichnet, dass** man die Formkörper auf dem zu sichernden Ufer, Abhang oder der zu sichernden Böschung oder an oder in einem Abstand zu dem zu sichernden Bauwerk aufbringt.

11. Verfahren zur Befestigung und Sicherung von Ufern, Abhängen und Böschungen, **dadurch gekennzeichnet, dass** ein Verbund nach Anspruch 1 bis 4 hergestellt wird, indem man lose mineralischen Partikel auf das zu befestigende Ufer aufbringt und darauf die flüssigen Ausgangskomponenten des Epoxydharzes aufbringt.

## Claims

1. A method for stabilizing and securing banks, hillsides and slopes, or structures present at least partly in moving waters, wherein the bank, the hillside, the slope or the structure is stabilized and secured by composites comprising an epoxy resin and loose mineral particles.

2. The method according to claim 1 or 2, wherein the loose mineral particles have a size of from 0.1 to 50 cm.

3. The method according to claim 1, wherein the composites according to claim 1 are produced by applying the liquid starting components of the epoxy resin to the mineral particles and curing the epoxy resin.

4. The method according to claim 3, wherein sand is applied to the surface of the epoxy resin after the application of the liquid starting components of the epoxy resin to the mineral particles and before the curing of the epoxy resin.

5. The method according to claim 3 or 4, wherein the liquid starting components of the epoxy resin are applied to the mineral particles by mixing mineral particles and liquid starting components of the epoxy resin in a mixer and then discharging the mixture obtained from the mixer.

6. The method according to claim 5, which is carried out batchwise.

7. The method according to claim 5, which is carried out continuously.

8. The method according to any of claims 5 to 7, wherein the mixture is applied to the bank to be secured, the hillside or the slope to be secured or to the structure to be secured or at a distance from the structure to be secured.

9. The method according to any of claims 5 to 7, wherein the mixture comprising the mineral particles and the liquid starting components of the epoxy resin is introduced into a mold before curing of the epoxy resin and is cured in this mold to give a molding.

10. The method according to claim 9, wherein the moldings are applied to the bank to be secured, the hillside or the slope to be secured or to the structure to be secured or at a distance from the structure to be secured.

11. A method for stabilizing and securing banks, hillsides and slopes, wherein a composite according to any of claims 1 to 4 is produced by applying loose mineral particles to the bank to be secured and then applying the liquid starting components of the epoxy resin.

## Revendications

1. Procédé en vue de la fixation et de la protection de rives, de pentes, de talus ou d'ouvrages de construction se trouvant au moins partiellement dans des eaux en mouvement, **caractérisé en ce que** l'on fixe et l'on protège la rive, la pente, le talus ou l'ouvrage de construction par des composites faits d'une résine époxyde et de particules minérales en vrac.

2. Procédé selon la revendication 1 ou 2, **caractérisé en ce que** les particules minérales en vrac possèdent une taille de 0,1 à 50 cm.

3. Procédé selon la revendication 1, **caractérisé en ce que** l'on fabrique les composites selon la revendication 1, en appliquant les composants de départ fluides de la résine époxyde sur les particules minérales et en durcissant la résine époxyde.

4. Procédé selon la revendication 3, **caractérisé en ce que,** après l'application des composants de départ fluides de la résine époxyde sur les particules minérales et avant le durcissement de la résine époxyde, l'on applique du sable sur la surface de la résine époxyde.

5. Procédé selon la revendication 3 ou 4, **caractérisé en ce que** l'on applique les composants de départ fluides de la résine époxyde sur les particules minérales en mélangeant dans un mélangeur les particules minérales et les composants de départ fluides de la résine époxyde et en expulsant ensuite le mélange obtenu hors du mélangeur.

6. Procédé selon la revendication 5, **caractérisé en ce que** le procédé est effectué d'une manière discontinue.

7. Procédé selon la revendication 5, **caractérisé en ce que** le procédé est effectué d'une manière continue.

8. Procédé selon les revendications 5 à 7, **caractérisé en ce que** l'on applique le mélange sur la rive, sur la pente ou sur le talus ou à protéger à une certaine distance sur ou l'ouvrage de construction à protéger.

9. Procédé selon les revendications 5 à 7, **caractérisé en ce que** l'on place le mélange, contenant les particules minérales et les composants de départ fluides de la résine époxyde, avant le durcissement de la résine époxyde, dans un moule, et **en ce que** l'on durcit le mélange dans ce moule pour former un corps moulé.

10. Procédé selon la revendication 9, **caractérisé en ce que** l'on applique les corps moulés sur la rive, la pente ou le talus à protéger ou sur ou à une certaine distance de l'ouvrage de construction à protéger.

11. Procédé en vue de la fixation et de la protection de rives, de pentes et de talus, **caractérisé en ce que** l'on fabrique un composite selon les revendications 1 à 4 en appliquant des particules minérales en vrac sur la rive à fixer et en appliquant par-dessus les composants de départ fluides de la résine époxyde.
